# EUROPEAN PATENT SPECIFICATION

(11) **EP 3 481 115 B1**
(45) Date of publication and mention of the grant of the patent: **11.01.2023**
(21) Application number: 17838603.3
(22) Date of filing: 01.08.2017
(51) Int. Cl.: H04W 56/00, H04W 72/12

(54) **TIMING SEQUENCE ADJUSTMENT METHOD, BASE STATION, TERMINAL AND COMMUNICATION SYSTEM**
VERFAHREN ZUR ANPASSUNG DER TAKTUNGSSEQUENZ, BASISSTATION, ENDGERÄT UND KOMMUNIKATIONSSYSTEM
PROCÉDÉ DE RÉGLAGE DE SÉQUENCE DE SYNCHRONISATION, STATION DE BASE, TERMINAL ET SYSTÈME DE COMMUNICATION

(30) Priority: 11.08.2016 CN 201610659286
(43) Date of publication of application: 08.05.2019
(73) Proprietor: Datang Mobile Communications Equipment Co., Ltd., Beijing 100085 (CN)
(72) Inventor: WANG, Lei, Beijing 100191 (CN); SI, Qianqian, Beijing 100191 (CN); PAN, Xueming, Beijing 100191 (CN); GAO, Xuejuan, Beijing 100191 (CN)
(74) Representative: dompatent von Kreisler Selting Werner - Partnerschaft von Patent- und Rechtsanwälten mbB
(86) International application number: PCT/CN2017/095466
(87) International publication number: WO 2018/028473

(56) References cited:
- WO-A1-2014/017792
- CN-A- 102 647 783
- CN-A- 102 843 761
- CN-A- 104 270 810
- US-A1- 2012 287 865
- ZTE ET AL: "Processing time reduction and related procedures", 3GPP DRAFT; R1-164641 PROCESSING TIME REDUCTION AND RELATED PROCEDURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Nanjing, China; 20160523 - 20160527 14 May 2016 (2016-05-14), XP051096368, Retrieved from the Internet: URL:http://www.3gpp.org/ftp/tsg_ran/WG1_RL 1/TSGR1_85/Docs/ [retrieved on 2016-05-14]
- ERICSSON: "Way forward on processing timing reduction for sTTI", 3GPP DRAFT; R1-165854, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. Nanjing; 20160523 - 20160527 30 May 2016 (2016-05-30), XP051112021, Retrieved from the Internet: URL:http://www.3gpp.org/ftp/tsg_ran/WG1_RL 1/TSGR1_85/Docs/ [retrieved on 2016-05-30]
- LG ELECTRONICS: "Processing time reduction for latency reduction", 3GPP DRAFT; R1-165429 PROCESSING TIME REDUCTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 20 May 2016 (2016-05-20), XP051111625, Retrieved from the Internet: URL:http://www.3gpp.org/ftp/tsg_ran/WG1_RL 1/TSGR1_85/Docs/ [retrieved on 2016-05-20]

## Description

### CROSS-REFERENCE TO RELATED APPLICATION

This application claims the benefit of Chinese Patent Application No. 201610659286.3, filed on August 11, 2016.

### TECHNICAL FIELD

The present disclosure relates to the field of communication technologies, and in particular, to a timing adjustment method, base station, terminal and communication system.

### BACKGROUND

Long Term Evolution (LTE) technology supports two duplex modes: Frequency Division Duplex (FDD) and Time Division Duplex (TDD). The TDD mode means that the uplink and downlink use the same working frequency band, and uplink and downlink signals are transmitted at different moments. The FDD mode means that the uplink and downlink use different working frequency bands, and the uplink and downlink signals are transmitted on different frequency carriers at the same moment.

In the LTE system, the length of one radio frame of the FDD mode and the TDD mode is 10 ms. One radio frame includes 10 subframes. The length of each subframe is 1 ms.

Seven TDD uplink and downlink subframe configurations are defined for a radio frame of the TDD mode, as shown in Table 1, where D represents a downlink subframe, U represents an uplink subframe, and S represents a special subframe.

**Table 1**

| Configuration No. | Conversion point period | subframe No. | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 10 ms | D | S | U | U | U | D | S | U | U | D |

In order to improve a transmission rate of a user, an LTE-Advanced (LTE-A) technology is proposed. An LTE-A TDD system and the LTE have the same Hybrid Automatic Repeat Request (HARQ) transmission timing, which includes an HARQ process of downlink data and an HARQ process of uplink data. During the HARQ process of the uplink data, a base station schedules Physical Uplink Shared Channel (PUSCH) resources by transmitting a Physical Downlink Control Channel (PDCCH) to a UE. After receiving the PDCCH, the UE transmits uplink data on a PUSCH channel specified by the PDCCH according to a timing relationship from the PDCCH to the PUSCH.

For the timing relationship from the PDCCH to the PUSCH, i.e., the timing relationship of the PUSCH scheduling, assuming the UE receives the PDCCH in a downlink subframe n, the PDCCH controls the PUSCH in an uplink subframe n+k. In this case, a value of k is defined in Table 2. Specifically, for the uplink and downlink configurations 1 to 6, the number of uplink subframes is less than that of downlink subframes, and a unique HARQ transmission timing may be configured. As shown in Table 2, the PUSCH may not be scheduled in one downlink subframe, or the PUSCH in one uplink subframe may only be scheduled. For the uplink and downlink configuration 0, the number of the uplink subframes is greater than that of the downlink subframes, and the PDCCH of each downlink subframe may schedule the PUSCH in two uplink subframes. As such, a UL index (used to indicate the uplink no.) is used in the PDCCH to support scheduling of the PUSCH in the two uplink subframes.

**Table 2**

| Configuration No. | Downlink subframe No. n | | | | | | | | | |
|---|---|---|---|---|---|---|---|---|---|---|
| | 0 | 1 | 2 | 3 | 4 | 5 | 6 | 7 | 8 | 9 |
| 0 | 4,7 | 6,7 | | | | 4,7 | 6,7 | | | |
| 1 | | 6 | | | 4 | | 6 | | | 4 |
| 2 | | | | 4 | | | | | 4 | |
| 3 | 4 | | | | | | | | 4 | 4 |
| 4 | | | | | | | | | 4 | 4 |
| 5 | | | | | | | | | 4 | |
| 6 | 7 | 7 | | | | 7 | 7 | | | 5 |

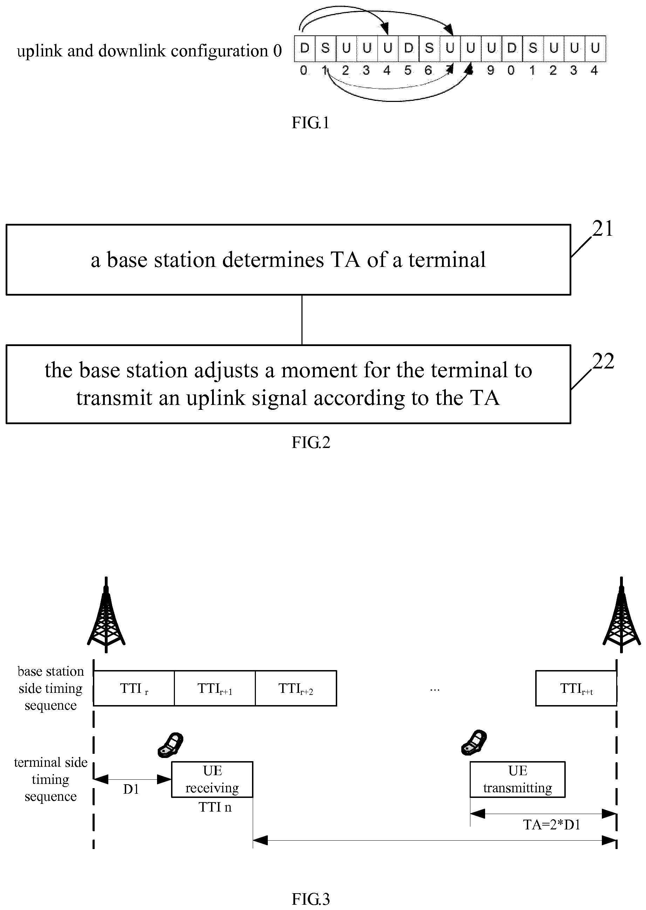

In the uplink and downlink configuration 0, there are three types of UL Index indications in the PDCCH which schedules the PUSCH, two of which schedule the PUSCH in a single subframe. The scheduling of the PUSCH in the single subframe is indicated by only one bit of two bits of the UL Index being 1. The other is to schedule the PUSCH in two subframes at a time, indicated by both two bits of the UL Index being 1. As shown in Figure 1, when the UE receives the PDCCH in the downlink subframe 0 and the MSB of the UL Index is "1", the PUSCH in the uplink subframe 4 is scheduled. When the LSB of the UL Index is "1", the PUSCH in the uplink subframe 7 is scheduled. When the MSB and the LSB of the UL index are both "1", the PUSCHs in the uplink subframe 4 and the uplink subframe 7 are scheduled. When the UE receives the PDCCH in the downlink subframe 1 and the MSB of the UL Index is "1", the PUSCH in the uplink subframe 7 is scheduled. When the LSB of the UL Index is "1", the PUSCH in the uplink subframe 8 is scheduled. When the MSB and the LSB of the UL Index are both "1", the PUSCHs in the uplink subframe 7 and the uplink subframe 8 are scheduled.

During the HARQ process of downlink data, the base station sends a Physical Downlink Shared Channel (PDSCH) to the UE. After receiving the PDSCH, the UE returns acknowledgement of the hybrid automatic repeat request (HARQ-ACK) of the PDSCH in the PUSCH or a Physical Uplink Control Channel (PUCCH) according to a timing relationship from the PDSCH to the PUSCH/PUCCH.

For the timing relationship from the PDSCH to the PUSCH/PUCCH, i.e., the PDSCH feedback HARQ-ACK timing relationship, assuming the UE returns the HARQ-ACK in the PUCCH/PUSCH of the uplink subframe n, the PUCCH/PUSCH indicates HARQ-ACK information of a PDSCH in a downlink subframe n-k, or HARQ-ACK information released by SPS. In this case, a value of k ∈ K is defined in Table 3. K is a set of M elements {k0, k1, ..., kM-1}, which is associated to the subframe number and the uplink and downlink configurations, and is called a downlink association set. Element k is called a downlink association number. In the present disclosure, a downlink subframe set corresponding to the downlink association set is simply referred to as a bundling window. That is, for all elements k in K, a set formed by n-k is called the bundling window, {n-k, k ∈ K}. The number of the elements in the bundling window is the size of the bundling window.

**Table 3**

| Configuration No. | Subframe n | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | - | 4 | - | - | 6 | - | 4 |
| 1 | - | - | 7,6 | 4 | - | - | - | 7,6 | 4 | - |
| 2 | - | - | 8, 7, 4, 6 | - | - | - | - | 8,7, 4,6 | - | - |
| 3 | - | - | 7, 6, 11 | 6,5 | 5, 4 | - | - | - | - | - |
| 4 | - | - | 12, 8, 7, 11 | 6,5,4, 7 | - | - | - | - | - | - |
| 5 | - | - | 13, 12, 9, 8, 7, 5, 4, 11,6 | - | - | - | - | - | - | - |
| 6 | - | - | 7 | 7 | 5 | - | - | 7 | 7 | - |

For the uplink and downlink configurations 1 to 6, the number of the uplink subframes is less than or equal to that of the downlink subframes. As such, one uplink subframe may return HARQ-ACK of PDSCHs in multiple downlink subframes. When the PUSCH of the uplink subframe is scheduled each time, the number of downlink subframes corresponding to HARQ-ACK returned by the uplink subframe is indicated by a UL DAI (representing an uplink no., similar to the UL index) in the PDCCH. After the UE learns the UL DAI information, PUSCH coding is performed on the HARQ-ACK of the PDSCH in a more efficient manner. The UL DAI and the UL Index correspond to a same field and contain two bits. When the HARQ process of the uplink/downlink data follows the timing of the uplink and downlink configuration 0, the two bits in the field are used as the UL Index. When the HARQ process of the uplink/downlink data follows the timing of the uplink and downlink configurations 1 to 6, the two bits in the field are used as the UL DAI.

In the FDD mode of the LTE system, a terminal receives downlink data in a subframe n-4, and returns signaling indicating whether the data on the downlink subframe needs to be retransmitted in the uplink subframe n. In other words, ACK/NACK information is returned, which is called Physical Downlink Shared Channel. Hybrid Automatic Repeat reQuest (PDSCHHARQ).

In order to make a moment at which data of terminals at different locations arrives at the base station is consistent with the timing of the base station, a timing advance (TA) is required when a terminal transmits data. A value of the TA is determined by a distance between the terminal and the base station. In a current LTE system, the maximum value of the TA is 0.67 ms, which is about 9-10 OFDM symbols. To ensure coverage of the base station and uplink synchronization, the terminal may support a current TA value range.

In the prior art, a TTI adopted by the LTE is generally 1 ms, which is consistent with the length of the subframe described above, so that it is easier to align in timing. With the development of technology, the LTE system begins to use a short TTI for communication. The length of the short TTI is generally 7 OFDM symbols or 2 OFDM symbols, which is less than the existing TTI length, i.e., 1 ms. When a communication system uses the short TTI to transmit a signal, the timing for the terminal to transmit an uplink signal is changed, which does not comply with the timing required by the current TA. When the signal is transmitted using the short TTI, the terminal transmits the uplink signal earlier than the prior art. In the case that the value of the TA is large, the terminal may not have enough time to process the data, thereby causing the terminal to fail to transmit the uplink signal.

ZTE ET AL: "Processing time reduction and related procedures", 3GPP DRAFT; R1-164641 PROCESSING TIME REDUCTION AND RELATED PROCEDURES, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX vol. RAN WG1, no. Nanjing, China; 20160523 - 20160527 14 May 2016 (2016-05-14), XP051096368 discusses processing time reduction and related procedures.

ERICSSON: "Way forward on processing timing reduction for sTTI", 3GPP DRAFT; R1-165854, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE no. Nanjing; 20160523 - 20160527 30 May 2016 (2016-05-30), XP051112021 describes proposals on processing time reduction for sTTI (short Transmission Time Interval).

LG ELECTRONICS: "Processing time reduction for latency reduction", 3GPP DRAFT; R1-165429 PROCESSING TIME REDUCTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE vol. RAN WG1, no. Nanjing, China; 20160523 - 20160527 20 May 2016 (2016-05-20), XP051111625 discusses several aspects of processing time when shortened TTI is applied to LTE legacy systems.

US 2012/287865 A1 discusses cross-scheduling for random access response.

### SUMMARY

The invention is defined by the appended claims.

### BRIEF DESCRIPTION OF THE DRAWINGS

Figure 1 is a schematic diagram illustrating frame structure of the TDD;
Figure 2 is a schematic flowchart of a timing adjustment method of the present disclosure on a base station side;
Figure 3 to Figure 5 are timing diagrams corresponding to a base station and a terminal according to the timing adjustment method of the present disclosure;
Figure 6 is a schematic flowchart of a timing adjustment method of the present disclosure on a terminal side;
Figure 7 is a schematic diagram illustrating structure of a base station of the present disclosure;
Figure 8 is a schematic diagram illustrating structure of a terminal of the present disclosure.

### DETAILED DESCRIPTION

Hereinafter, the technical problem, the technical solution, and the advantages of the present disclosure will be clearly described with reference to the accompanying drawings and embodiments.

When the TA of the communication system in the prior art is large and when the short TTI configuration is adopted, a terminal may have no processing capability to transmit an uplink signal. In view of this, the present disclosure provides a solution.

In one aspect, an embodiment of the present disclosure provides a timing adjustment method on a base station side, as shown in Figure 2, including following operations.

At step 21, a base station determines TA of a terminal.

At step 22, the base station adjusts a moment for the terminal to transmit an uplink signal according to the TA.

The method in the embodiment dynamically adjusts the moment at which the terminal transmits the uplink signal according to the actual TA, so that the terminal may reasonably obtain sufficient data processing time to avoid the problem that the uplink signal is not transmitted due to insufficient processing capability of the terminal.

Further, in the embodiment, the short TTI is used for communication. According to the scheduling timing defined in the current LTE system, after receiving uplink scheduling information or downlink data, a terminal of which scheduling is on the short TTI may transmit the uplink signal earlier, which reduces the processing time of the terminal. For this reason, in the embodiment, the moment at which the terminal transmits the uplink signal may be delayed, which may provide sufficient processing time for the terminal, so as to avoid the failure of the transmission of the uplink signal.

The timing adjustment method of the present embodiment is exemplarily described below.

In practice, the uplink signal in the embodiment may be uplink data transmitted by the terminal to the base station in response to uplink scheduling information after the terminal receives the uplink scheduling information transmitted by the base station.

During the entire transmission process, the base station firstly transmits the uplink scheduling information to the terminal. The terminal receives the uplink scheduling information, extracts scheduling information for transmitting uplink data, and then transmits the uplink data to the base station according to the scheduling information. Obviously, a transmission path of the process is base station→terminal→base station. Therefore, the corresponding TA is the sum of time consumed by transmitting the uplink scheduling information from the base station to the terminal and time consumed by transmitting the uplink data from the terminal to the base station.

As can be seen from the description in the background art, the embodiment delays the moment at which the terminal transmits the uplink data, so that the terminal has enough time to process data before transmitting the uplink data.

As a feasible implementation, the embodiment may determine a time adjustment amount M for the terminal to transmit the uplink data, where the time adjustment amount M represents m (m is a positive integer) transmission time intervals.

Then, the base station transmits adjustment information to the terminal through the uplink scheduling information, in which the adjustment information includes the time adjustment amount M. As such, the terminal may determine the time adjustment amount M according to the uplink scheduling information, and determine the moment at which the terminal transmits the uplink data according to the time adjustment amount M and the TA value.

It should be noted that in the embodiment, the role of the time adjustment amount M is to let the terminal determine delaying of the moment for the transmission of the uplink data. In practice, meanings of the time adjustment amount M in the embodiment are different, and may correspond to different values.

For example, the time adjustment amount M in the embodiment indicates that after receiving the uplink scheduling information, the terminal transmits the uplink data after m transmission time intervals. As shown in FIG. 3, assuming that TTIn is a transmission time interval for the terminal receiving the uplink scheduling information, it is determined that a theoretical transmission time interval for transmitting the uplink data is TTIn+m. The TTIn+m is the theoretical transmission time interval notified by the base station side. In practice, the terminal side may consider time consumed by path transmission, and may transmit the uplink data one TA in advance based on TTIx=n+m. It can be seen from FIG. 3 that the distance between the base station and the terminal is D1, and a total transmission path of a signal is 2D1. As such, the transmission time interval actually transmitted by the terminal is to advance the transmission time interval consumed by the transmission in the 2D1 path.

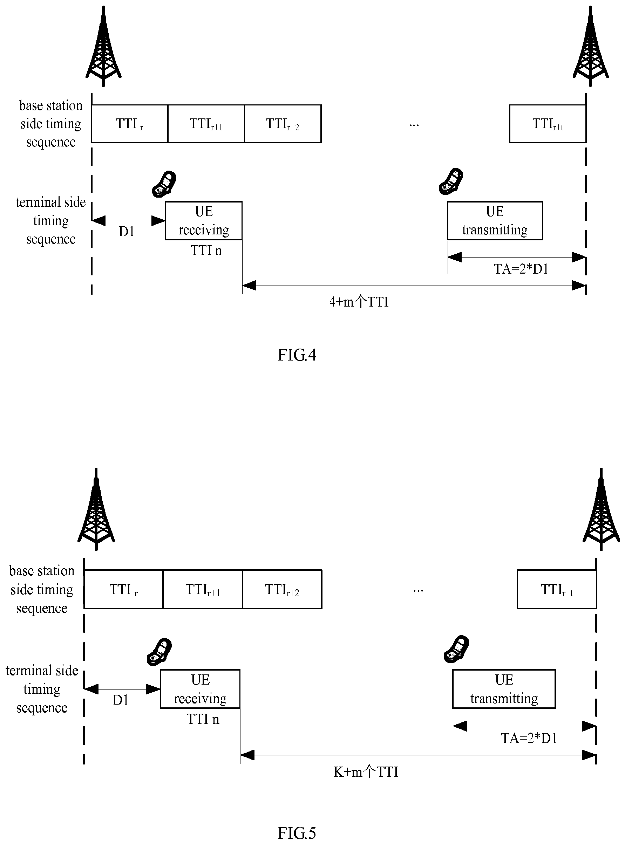

For another example, the time adjustment amount M of the embodiment indicates that the terminal transmits the uplink data after m transmission time intervals based on the transmission time interval for transmitting the uplink data defined in the current LTE system. Then, when the UE adopts an FDD communication standard, assuming that the TTIn is the transmission time interval for the terminal receiving the uplink scheduling information, the theoretical transmission time interval for the terminal to transmit the uplink data is TTIn+4+m. Similarly, considering the time consumed by the path transmission, as shown in FIG. 4, the transmission time terminal for the terminal actually transmitting the uplink data may be one TA ahead of the theoretical transmission time interval TTIn+4+m (i.e., time consumed by transmission of the 2D1 path). Or, when the UE adopts a TDD communication standard, assuming that TTIn is the transmission time interval for the terminal receiving the uplink scheduling information, the theoretical transmission time interval of the uplink data that is finally delayed is TTIn+K+m (k is a fixed value, and corresponds to the uplink and downlink configuration adopted by TDD, referring to background art). As shown in FIG. 5, considering the time-consuming influence of the transmission path, the transmission time terminal for the terminal actually transmitting the uplink data may be one TA ahead of the theoretical transmission time interval TTIn+K+m (i.e., time consumed by transmission of the 2D1 path).

Obviously, it can be seen from the above description that technical solutions in which the terminal may determine the theoretical transmission time interval for transmitting the uplink data based on the time adjustment amount M belong to the protection scope of the present disclosure regardless of the definition of the time adjustment amount M and the value of m.

In addition, in practice, the uplink signal in the embodiment may also be an acknowledgement (ACK) or a negative acknowledgement (NACK) of downlink data returned by the terminal to the base station after the terminal receives downlink scheduling information and the downlink data sent by the base station.

That is, during the entire transmission process, the base station firstly sends the downlink scheduling information and the downlink data to the terminal. The terminal receives the downlink scheduling information, extracts scheduling information for sending the ACK or NACK, and then sends the ACK or NACK to the base station according to the scheduling information. Obviously, a transmission path of the process is the base station→the terminal→the base station. Therefore, the corresponding TA is the sum of the time consumed by transmitting the downlink scheduling information from the base station to the terminal and the time consumed by transmitting the ACK or NACK from the terminal to the base station.

Correspondingly, the base station may determine, according to the size of the TA, a time adjustment amount P for the terminal to transmit the uplink data, where the time adjustment amount P represents p (p is a positive integer) transmission time intervals.

Then, the base station transmits adjustment information to the terminal through the downlink scheduling information, in which the adjustment information indicates the time adjustment amount P, so that the terminal may transmit the ACK or the NACK according to the time adjustment amount P and the TA in the adjustment information after receiving the downlink scheduling information.

It should be noted that in the embodiment, the role of the time adjustment amount P is to allow the terminal to determine a moment for transmitting the ACK or the NACK. In practice, meanings of the time adjustment amount P in the embodiment are different, and may correspond to different values.

For example, the time adjustment amount P in the embodiment indicates that after receiving the downlink scheduling information, the terminal transmits the ACK or the NACK after p transmission time intervals. Assuming that the TTIn is the transmission time interval for the terminal receiving the uplink scheduling information, the theoretical time interval for transmitting the uplink data is TTIn+p.

For another example, the time adjustment amount P of the embodiment indicates that the terminal transmits the ACK or the NACK after p transmission time intervals based on the transmission time interval for transmitting the uplink data defined in the current LTE system. When the UE adopts the FDD communication standard, assuming that the TTIn is the transmission time interval for the terminal receiving the uplink scheduling information, the theoretical transmission time interval of the transmitted uplink data is TTIx=n+k+p (k is a fixed value, and corresponds to the uplink and downlink configuration adopted by TDD).

It can be seen from the above description that the transmission time interval for the terminal actually transmitting the ACK or the NACK may be one TA ahead of the theoretical transmission time interval of the ACK or the NACK.

Similarly, technical solutions in which the terminal may determine the theoretical transmission time interval for transmitting the uplink data based on the time adjustment amount P belong to the protection scope of the present disclosure regardless of the definition of the time adjustment amount P and the value of p.

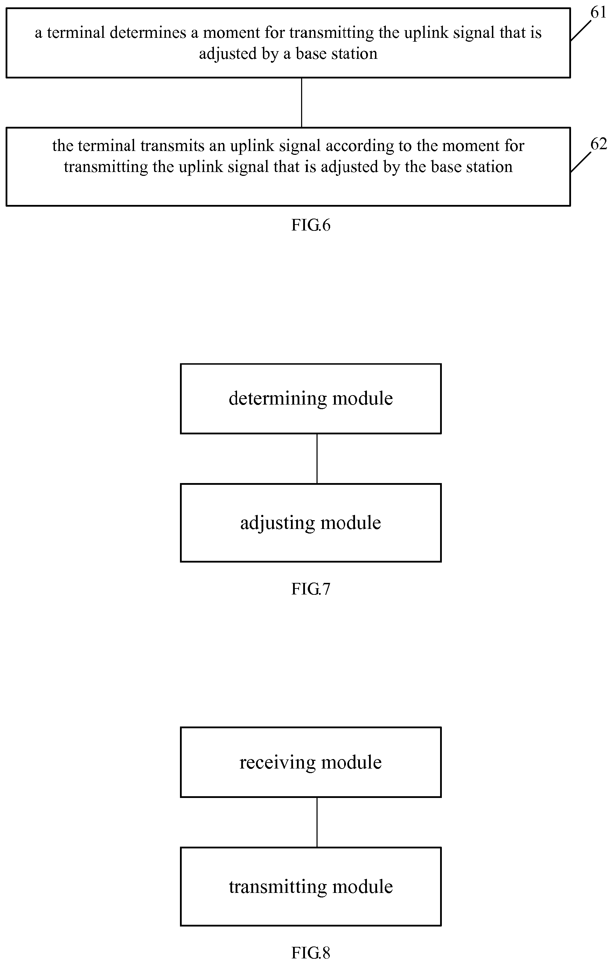

In another aspect, corresponding to the timing adjustment method on the base station side, another embodiment of the present disclosure further provides a timing adjustment method on the terminal side, as shown in FIG. 6. The method includes following operations.

At step 61, a terminal receives uplink scheduling information or downlink scheduling information transmitted by a base station.

At step 62, the terminal transmits an uplink signal according to adjustment information of a moment for transmitting the uplink signal included in the uplink scheduling information or the downlink scheduling information.

Obviously, the timing adjustment method on the terminal side of the present embodiment is applied to the timing adjustment method on the base station side. Therefore, the same advantageous effects as the timing adjustment method on the base station side may be achieved based on the timing adjustment method on the base station side.

As an exemplary example, the uplink signal in the embodiment includes uplink data transmitted from the terminal to the base station in response to the uplink scheduling information after the terminal receives the uplink scheduling information transmitted by the base station.

In step 61, the terminal acquires the adjustment information of the moment for transmitting the uplink data according to the uplink scheduling information transmitted by the base station, and determines, from the adjustment information, a time adjustment amount M for transmitting the uplink data. In this case, the time adjustment amount M represents m transmission time intervals.

Correspondingly, in step 62, after the terminal receives the uplink scheduling information, the terminal transmits the uplink data after m transmission time intervals according to the time adjustment amount M. Alternatively, the terminal transmits, according to the time adjustment amount M, the uplink data after m transmission time intervals based on the transmission time interval for transmitting the uplink data defined in the current LTE system.

For example, when the terminal transmits the uplink data after m transmission time intervals according to the time adjustment amount M after the terminal receives the uplink scheduling information, assuming that TTIn is the transmission time interval for the terminal receiving the uplink scheduling information, a corresponding theoretical transmission time interval is TTIn+m. In practice, the terminal may consider the TA to transmit the uplink data. Therefore, the transmission time interval for actually transmitting the uplink data is one TA ahead of the theoretical transmission time interval TTIn+m.

For another example, when the terminal transmits, according to the time adjustment amount M, the uplink data after m transmission time intervals based on the transmission time interval for transmitting the uplink data defined in the current LTE system, and when the UE adopts the FDD communication standard, the theoretical transmission time interval for transmitting the uplink data is TTIx=n+4+m, and the transmission time interval for actually transmitting the uplink data is one TA ahead of TTIx=n+4+m. When the UE adopts the TDD communication standard, the theoretical time interval for transmitting the uplink data is TTIx=n+k+m (k is a fixed value, which corresponds to the uplink and downlink configuration adopted by TDD), and the transmission time interval for actually transmitting the uplink data is one TA ahead of TTIx=n+4+m.

In addition, as another exemplary example, the uplink signal in the embodiment may further include an ACK or a NACK of downlink data returned by the terminal to the base station after the terminal receives downlink scheduling information and the downlink data sent by the base station.

Correspondingly, in step 61, the terminal acquires adjustment information of a moment for transmitting the ACK or the NACK according to the downlink scheduling information sent by the base station, and determines a time adjustment amount P for transmitting the ACK or the NACK from the adjustment information.

Correspondingly, in step 62, after the terminal receives the downlink scheduling information, the terminal transmits the ACK or the NACK after p transmission time intervals according to the time adjustment amount P. Alternatively, the terminal transmits, according to the time adjustment amount P, the ACK or the NACK after p transmission time intervals based on the transmission time interval for transmitting the ACK or the NACK defined in the current LTE system (the principle is the same as that of the method corresponding to the time adjustment amount M described above, which is not repeated herein).

Hereinafter, several embodiments of the timing adjustment method of the present disclosure are described in detail combining the timing adjustment method on the base station side and the timing adjustment method on the terminal side.

### First Embodiment

In the first embodiment, a terminal UE adopts the FDD communication standard, and it is assumed that the time required for the terminal to process data is shortened according to the shortening of the short TTI.

It is assumed that after the terminal receives downlink scheduling information and downlink data at TTIn, the terminal is to transmit an ACK/NACK of the downlink data at TTIn+4, and the terminal is to transmit an uplink signal after 3 TTIs after receiving downlink scheduling information and downlink data.

Similar to scheduling timing of FDD in the LTE system, it is further assumed that the length of one TTI is 2 OFDM symbols, a transmission delay from the terminal UE to the base station is 2 OFDM symbols, and the length of the TA is the time domain length of 4 OFDM symbols (i.e., 2 short TTIs), which is approximately equal to 0.285 ms.

After the base station learns the TA, the base station may determine whether the UE has a processing capability for transmitting the ACK/NACK under the short TTI configuration. As an exemplary example, the determination process is described as follows.

The base station compares the TA with a preset threshold TA1. When the TA is greater than TA1, the moment for transmitting the ACK/NACK is to be adjusted. Otherwise, no adjustment is made, and the ACK/NACK is returned according to the scheduling timing defined in the current LTE system.

In practice, the UE may use TTIs with different lengths. In the embodiment, a TA1 may be respectively configured for the TTIs with different lengths. For example, in a short TTI, the processing time of the terminal is less, and a value of a corresponding TA1 is relatively small. In this case, the present embodiment may determine whether the terminal may transmit the ACK/NACK under the current TTI based on a reasonable evaluation criterion.

Obviously, in the embodiment, the TA is greater than TA1. As such, the base station determines that the terminal does not have the processing capability for transmitting the ACK/NACK according to the scheduling timing defined in the current LTE system, and then adjusts a transmission moment. In other words, the base station determines a time adjustment amount P, and transmits the time adjustment amount P to the terminal through the downlink scheduling information.

It is assumed that in the first embodiment, the time adjustment amount P indicates that the terminal transmits the ACK/NACK of the downlink data after p transmission time intervals based on the transmission time interval for transmitting the ACK/NACK defined in the LTE system. In this case, p is equal to 2, which is consistent with TA.

After the UE receives the downlink scheduling information and the downlink data, the base station is to receive the ACK/NACK of the downlink data on TTIn+4. The UE determines that the theoretical transmission time interval of the ACK/NACK is TTIn+4+2 according to the time adjustment amount P in the downlink scheduling information. The UE completes the transmission of the ACK/NACK based on the theoretical transmission time interval TTIn+4+2.

Alternatively, in the first embodiment, it is assumed that the time adjustment amount P indicates that the terminal transmits the ACK/NACK after p transmission time intervals after receiving the downlink scheduling information. In this case, p is equal to 6.

After receiving the downlink scheduling information, the UE consumes three TTIs to perform related processing, and determines, from the time adjustment amount P in the downlink scheduling information, that the theoretical transmission time interval of the ACK/NACK is TTIn+6. The UE completes the transmission of the ACK/NACK based on the theoretical transmission time interval TTIn+6.

By comparing the above two different definitions of the time adjustment amount P, it may be seen that the time that the terminal finally delays the transmission of the ACK/NACK is the same.

### Second Embodiment

In the second embodiment, a terminal UE adopts the FDD communication standard, and it is assumed that the time required for the terminal to process data is shortened according to the shortening of the short TTI.

It is assumed that the terminal receives uplink scheduling information at subframe TTIn, transmits uplink data at TTIn+4, and transmits an uplink signal after 3 TTIs after receiving downlink scheduling information and downlink data.

Similar to scheduling timing of FDD in the LTE system, it is further assumed that the length of one TTI is 2 OFDM symbols, a transmission delay from the terminal UE to the base station is 2 OFDM symbols, and the length of the TA is the time domain length of 4 OFDM symbols (i.e., 2 short TTIs), which is approximately equal to 0.285 ms.

After the base station learns the TA, the base station may determine whether the UE has a processing capability for transmitting the uplink data under the TTI with such length.

It is assumed that in the embodiment, the base station determines that the terminal does not have the processing capability for transmitting the uplink data according to the scheduling timing defined in the current LTE system, and then adjusts a transmission moment. In other words, the base station determines a time adjustment amount M, and transmits the time adjustment amount M to the terminal through the uplink scheduling information.

It is assumed that in the embodiment, the time adjustment amount M indicates that the terminal transmits the uplink data after m transmission time intervals based on the transmission time interval for transmitting the uplink data defined in the current LTE system. In this case, m is equal to 2, which is consistent with TA.

After receiving the uplink scheduling information, it is assumed that the UE consumes three TTIs to perform related processing. The terminal determines, according to the time adjustment amount m in the uplink scheduling information, that the theoretical transmission time interval of the uplink data is TTIn+4+2, and completes the transmission of the uplink data based on the theoretical transmission time interval TTIn+4+2.

Alternatively, in the embodiment, it is assumed that the time adjustment amount M indicates that the terminal transmits the uplink data after m transmission time intervals after receiving the uplink scheduling information. In this case, m is equal to 6.

After receiving the uplink scheduling information, the UE consumes three TTIs to perform related processing. The UE determines, from the time adjustment amount m in the uplink scheduling information, that the theoretical transmission time interval of the uplink data is TTIn+6. The UE completes the transmission of the uplink data based on the theoretical transmission time interval TTIn+6.

### Third Embodiment

In the third embodiment, a UE adopts the TDD communication standard. It is assumed that the time required for the terminal to process data is shortened according to the shortening of the short TTI, and the terminal transmits ACK/NACK of downlink data after 3 short TTIs after the terminal receives downlink scheduling DCI and the downlink data.

Since the number of uplink subframes and the number of downlink subframes in one radio frame configured for different sub frame configurations in the TDD are different, subframe configuration is considered in addition to considering the time for the terminal to process data. That is, the base station indicates, in the downlink scheduling information, the feedback time of the ACK/NACK of the downlink data according to the time required by the terminal to process the data, the actual TA, and the subframe configuration.

In an example, a subframe adopts configuration no. 1 in Table 1. It is assumed that the length of the short TTI in the subframe is 2 OFDM symbols, and the terminal consumes at least three short TTIs to process data after receiving downlink scheduling information and downlink data. Assuming that the length of the TA is the time domain length of 4 OFDM symbols (i.e., two short TTIs), the terminal receives the downlink scheduling information and the downlink data at the first available short TTIn (n=1) in subframe 0. Then, according to the TA and the time required by the terminal to process the data, the terminal returns the downlink ACK/NACK at short TTIn+6. However, since the short TTIn+6=1+6=7 is in subframe 1 and the subframe 1 is a special subframe, a position corresponding to TTI 7 in this period is DwPTS, and an uplink channel may not be transmitted. Therefore, in the embodiment, the value of the time adjustment amount P needs to consider that the time interval for transmitting the ACK/NACK that is finally delayed falls on an uplink subframe.

As an example, the time adjustment amount P of the embodiment includes p=13 time intervals, indicating that the terminal delays 13 TTIs after receiving the downlink scheduling information. The time interval for the terminal to transmit the ACK/NACK is TTIn+13, which corresponds to an uplink subframe.

### Fourth Embodiment

In the fourth embodiment, a UE adopts the TDD communication standard. It is assumed that the time required for the terminal to process data is shortened according to the shortening of the short TTI, and the terminal consumes 3 TTIs for related processing after receiving the uplink scheduling information. Since the number of uplink subframes and the number of downlink subframes in one radio frame configured for different subframe configurations in the TDD are different, subframe configuration is considered in addition to considering the time for the terminal to process data.

That is, the base station indicates, in the uplink scheduling information, the short TTI of transmission of the uplink data according to the time required by the terminal to process the data, the actual TA, and the subframe configuration.

In an example, a subframe adopts configuration no. 1 in Table 1. It is assumed that the length of the short TTI in the subframe is 2 OFDM symbols, and the terminal consumes at least three short TTIs to process data after receiving the uplink scheduling information. Assuming that the length of the TA is the time domain length of 4 OFDM symbols (i.e., two short TTIs), the terminal receives the uplink scheduling information at the first available short TTIn (n=1) in subframe 0. Then, according to the TA and the time required by the terminal to process the data, the terminal transmits the uplink data at short TTIn+6.

However, since the short TTIn+6=1+6=7 is in subframe 1 and the subframe 1 is a special subframe, a position corresponding to TTI 7 in this period is DwPTS, and an uplink channel may not be transmitted. Therefore, in the embodiment, the value of m needs to consider that the time interval for the terminal to transmit the uplink data falls on an uplink subframe.

As an example, the time adjustment amount M of the embodiment includes m=13 time intervals, indicating that the terminal delays 13 TTIs after receiving the downlink scheduling information. The time interval for the terminal to transmit the ACK/NACK is TTIn+13, which corresponds to an uplink subframe.

It should be noted that in the first embodiment to the fourth embodiment, the time domain length of the short TTI is 2 OFDM symbols. The time domain length of the short TTI may be 7 OFDM symbols or 3 OFDM symbols or 4 OFDM symbols. The time required by the terminal to process the data after receiving the downlink scheduling information and the downlink data or the uplink scheduling information may be defined as other time, such as five short TTIs. The processing time is related to the capability of the terminal, which is not limited in the present disclosure. In addition, the present disclosure does not limit how the base station determines whether the terminal has the processing capability of transmitting an uplink signal under the current TA and TTI value.

Correspondingly, an embodiment of the present disclosure further provides a base station, as shown in FIG. 7. The base station includes:
a determining module, configured to determine TA of a terminal; and
an adjusting module, configured to adjust, according to the TA, a moment for the terminal to transmit an uplink signal.

The base station in the embodiment dynamically adjusts the moment at which the terminal transmits the uplink signal according to the actual TA, so that the terminal may reasonably obtain sufficient data processing time to avoid the problem that the uplink signal is not transmitted due to insufficient processing capability of the terminal.

Specifically, the determining module in the embodiment may delay the moment at which the terminal transmits the uplink signal according to the TA.

The delay scheme of the uplink signal is described in detail below.

In an embodiment, the uplink signal includes uplink data transmitted by the terminal to the base station in response to uplink scheduling information after the terminal receives the uplink scheduling information transmitted by the base station.

The adjusting module includes:
a second receiving sub-module, configured to acquire the adjustment information of the moment for transmitting the ACK/NACK according to the downlink scheduling information transmitted by the base station, and determine, from the adjustment information, a time adjustment amount P for transmitting the ACK/NACK, wherein the time adjustment amount P represents p transmission time intervals;
a first adjusting sub-module, configured to adjust, according to the TA, a transmission time interval for the terminal to transmit the uplink data after receiving the uplink scheduling information, so that the terminal has enough time to process data before transmitting the uplink data.

Specifically, the first adjusting sub-module includes:
a first determining unit, configured to determine a time adjustment amount M for the terminal to transmit the uplink data, wherein the time adjustment amount M represents m transmission time intervals, indicates that the terminal transmits the uplink data after m transmission time intervals after receiving the uplink scheduling information, or indicates that the terminal transmits the uplink data after m transmission time intervals based on a transmission time interval for transmitting the uplink data defined in a current LTE system, m is a positive integer;
a first transmitting unit, configured to transmit adjustment information to the terminal through the uplink scheduling information, wherein the adjustment information comprises the time adjustment amount M.

In another embodiment, the uplink signal includes an ACK or a NACK of downlink data returned by the terminal to the base station after the terminal receives downlink scheduling information and downlink data sent by the base station.

The adjusting module includes:
a second adjusting sub-module, configured to adjust, according to the TA, a transmission time interval for the terminal to transmit the ACK/NACK, so that the terminal has enough time to process data before transmitting the ACK/NACK.

The second adjusting sub-module includes:
a second determining unit, configured to determine a time adjustment amount P for the terminal to transmit the ACK/NACK, wherein the time adjustment amount P represents p transmission time intervals, indicates that the terminal transmits the ACK/NACK after p transmission time intervals after receiving the downlink scheduling information, or indicates that the terminal transmits the ACK/NACK after p transmission time intervals based on a transmission time interval for transmitting the ACK/NACK defined in a current LTE system, p is a positive integer;
a second transmitting unit, configured to transmit adjustment information to the terminal through the downlink scheduling information, wherein the adjustment information comprises the time adjustment amount P.

Obviously, the base station in the present embodiment corresponds to the timing adjustment method on the base station side described above. Therefore, the same technical effects as the timing adjustment method on the base station side may be achieved.

Correspondingly, an embodiment of the present disclosure further provides a terminal, as shown in FIG. 8. The terminal includes:
a receiving module, configured to receive uplink scheduling information or downlink scheduling information transmitted by a base station;
a transmitting module, configured to transmit an uplink signal according to adjustment information of a moment for transmitting the uplink signal comprised in the uplink scheduling information or the downlink scheduling information.

Obviously, the terminal in the present embodiment corresponds to the timing adjustment method on the base station side described above. Therefore, the same advantageous effects as the timing adjustment method on the base station side may be achieved based on the timing adjustment method on the base station side.

In an embodiment, the uplink signal includes uplink data transmitted by the terminal to the base station in response to the uplink scheduling information after the terminal receives the uplink scheduling information transmitted by the base station.

The receiving module includes:
a first receiving sub-module, configured to acquire the adjustment information of the moment for transmitting the uplink data according to the uplink scheduling information transmitted by the base station, and determine a time adjustment amount M for transmitting the uplink data, wherein the time adjustment amount M represents m transmission time intervals.

The transmitting sub-module includes:
a first transmitting sub-module, configured to transmit, after the terminal receives the uplink scheduling information and according to the time adjustment amount M, the uplink data after m transmission time intervals, or transmit, according to the time adjustment amount M, the uplink data after m transmission time intervals based on a transmission time interval for transmitting the uplink data defined in a current LTE system.

Specifically, the first transmitting sub-module is further configured to transmit, after the terminal receives the uplink scheduling information, the uplink data according to the time adjustment amount M and TA.

In another embodiment, the uplink signal includes an ACK or a NACK of downlink data returned by the terminal to the base station after the terminal receives downlink scheduling information and the downlink data transmitted by the base station.

The receiving module includes:
a second receiving sub-module, configured to acquire the adjustment information of the moment for transmitting the ACK/NACK according to the downlink scheduling information transmitted by the base station, and determine, from the adjustment information, a time adjustment amount P for transmitting the ACK/NACK, wherein the time adjustment amount P represents p transmission time intervals.

The transmitting sub-module includes:
a second transmitting sub-module, configured to transmit, after the terminal receives the downlink scheduling information and according to the time adjustment amount P, the ACK/NACK after p transmission time intervals, or transmit, according to the time adjustment amount P, the ACK/NACK after p transmission time intervals based on a transmission time interval for transmitting the ACK/NACK defined in a current LTE system.

Specifically, the second transmitting sub-module is configured to transmit, after the terminal receives the downlink scheduling information, the ACK/NACK of the downlink data according to the time adjustment amount P and TA.

Obviously, the terminal in the present embodiment corresponds to the timing adjustment method on the terminal side described above. Therefore, the same technical effects as the timing adjustment method on the terminal side may be achieved.

In addition, the present disclosure also provides a communication system including the above-described base station and the above-described terminal. Obviously, based on the base station and the terminal provided by the present disclosure, when the communication system is configured with a short TTI, the terminal farther from the base station may normally transmit an uplink signal, which also meets a timing requirement of current TA.

The foregoing are several embodiments of the present disclosure. It should be noted that, for persons having ordinary skill in the art, various improvements and retouches, which are made without departing from the principle of the present disclosure, should be covered by the present disclosure.

## Claims

1. A timing adjustment method, comprising:
determining, by a base station, timing advance,TA, of a terminal; and adjusting, by the base station according to the TA, a moment for the terminal to transmit an uplink signal;
wherein the uplink signal comprises an acknowledgement, ACK, or a negative acknowledgement, NACK, of downlink data returned by the terminal to the base station after the terminal receives downlink scheduling information and downlink data sent by the base station, and the adjusting, by the base station according to the TA, the moment for the terminal to transmit the uplink signal, includes:
determining, by the base station according to the TA, a time adjustment amount P for the terminal to transmit the ACK/NACK, wherein the time adjustment amount P represents p transmission time intervals, indicates that the terminal transmits the ACK/NACK after p transmission time intervals after receiving the downlink scheduling information, or indicates that the terminal transmits the ACK/NACK after p transmission time intervals based on a transmission time interval for transmitting the ACK/NACK defined in a current LTE system, p is a positive integer; and
transmitting, by the base station, adjustment information to the terminal through the downlink scheduling information, wherein the adjustment information comprises the time adjustment amount P.

2. The method of claim 1, wherein the uplink signal further comprises uplink data transmitted by the terminal to the base station in response to uplink scheduling information after the terminal receives the uplink scheduling information transmitted by the base station;
wherein adjusting, by the base station according to the TA, the moment for the terminal to transmit the uplink data comprises: adjusting, by the base station according to the TA, a transmission time interval for the terminal to transmit the uplink data after receiving the uplink scheduling information, so that the terminal has enough time to process data before transmitting the uplink data.

3. The method of claim 2, wherein the adjusting, by the base station, the moment for the terminal to transmit the uplink data comprises:
determining, by the base station, a time adjustment amount M for the terminal to transmit the uplink data, wherein the time adjustment amount M represents m transmission time intervals, indicates that the terminal transmits the uplink data after m transmission time intervals after receiving the uplink scheduling information, or indicates that the terminal transmits the uplink data after m transmission time intervals based on a transmission time interval for transmitting the uplink data defined in a current LTE system, m is a positive integer; and
transmitting, by the base station, adjustment information to the terminal through the uplink scheduling information, wherein the adjustment information comprises the time adjustment amount M.

4. A timing adjustment method, comprising:
receiving, by a terminal, downlink scheduling information transmitted by a base station; wherein the downlink scheduling information includes adjustment information; and transmitting, by the terminal, an uplink signal according to the adjustment information;
wherein the uplink signal comprises an acknowledgement, ACK, or a negative acknowledgement , NACK, of downlink data returned by the terminal to the base station after the terminal receives downlink scheduling information and the downlink data transmitted by the base station; the transmitting, by the terminal, the uplink signal according to the adjustment information, includes:
acquiring, by the terminal, from the adjustment information, a time adjustment amount P for the terminal to transmit the ACK/NACK; wherein the time adjustment amount P represents p transmission time intervals, indicates that the terminal transmits the ACK/NACK after p transmission time intervals after receiving the downlink scheduling information, or indicates that the terminal transmits the ACK/NACK after p transmission time intervals based on a transmission time interval for transmitting the ACK/NACK defined in a current LTE system, p is a positive integer;
after the terminal receives the downlink scheduling information, transmitting, by the terminal according to the time adjustment amount P, the ACK/NACK after p transmission time intervals; or, transmitting, by the terminal according to the time adjustment amount P, the ACK/NACK after p transmission time intervals based on the transmission time interval for transmitting the ACK/NACK defined in the current LTE system.

5. The method of claim 4, further comprising:
after the terminal receives the downlink scheduling information, transmitting, by the terminal, the ACK/NACK of the downlink data according to the time adjustment amount P and timing advance, TA.

6. The method of claim 4, wherein the uplink signal comprises uplink data transmitted by the terminal to the base station in response to uplink scheduling information after the terminal receives the uplink scheduling information transmitted by the base station;
wherein the transmitting, by the terminal, the uplink signal according to the adjustment information, further comprises:
acquiring, by the terminal, adjustment information in the uplink scheduling information transmitted by the base station, and determining a time adjustment amount M for the terminal to transmit the uplink data from the adjustment information in the uplink scheduling information transmitted by the base station; wherein the time adjustment amount M represents m transmission time intervals, indicates that the terminal transmits the uplink data after m transmission time intervals after receiving the uplink scheduling information, or indicates that the terminal transmits the uplink data after m transmission time intervals based on a transmission time interval for transmitting the uplink data defined in a current LTE system, m is a positive integer;
after the terminal receives the uplink scheduling information, transmitting, by the terminal according to the time adjustment amount M, the uplink data after m transmission time intervals; or, transmitting, by the terminal according to the time adjustment amount M, the uplink data after m transmission time intervals based on the transmission time interval for transmitting the uplink data defined in the current LTE system.

7. The method of claim 6, further comprising: after the terminal receives the uplink scheduling information, transmitting, by the terminal, the uplink data according to the time adjustment amount M and timing advance, TA.

8. A base station, comprising:
a processor;
a storage, connected with the processor via a bus interface, and configured to store instructions and data required by the processor in performing operations;
a transceiver, configured to communicate with various other devices on a transmission medium;
wherein when the processor is called to execute the instructions and data stored in the storage, the base station is configured to perform the following processing:
determining timing advance, TA, of a terminal; and
adjusting, according to the TA, a moment for the terminal to transmit an uplink signal;
wherein the uplink signal comprises an acknowledgement, ACK, or a negative acknowledgement, NACK, of downlink data returned by the terminal to the base station after the terminal receives downlink scheduling information and downlink data sent by the base station;
wherein when adjusting, according to the TA, the moment for the terminal to transmit the uplink signal, the processor is called to execute the instructions and data stored in the storage to perform following processing:
determining, according to the TA, a time adjustment amount P for the terminal to transmit the ACK/NACK, wherein the time adjustment amount P represents p transmission time intervals, indicates that the terminal transmits the ACK/NACK after p transmission time intervals after receiving the downlink scheduling information, or indicates that the terminal transmits the ACK/NACK after p transmission time intervals based on a transmission time interval for transmitting the ACK/NACK defined in a current LTE system, p is a positive integer; and
transmitting, adjustment information to the terminal through the downlink scheduling information, wherein the adjustment information comprises the time adjustment amount P.

9. A terminal, comprising:
a processor;
a storage, connected with the processor via a bus interface, and configured to store instructions and data required by the processor in performing operations;
a transceiver, configured to communicate with various other devices on a transmission medium;
wherein when the processor is called to execute the instructions and data stored in the storage, the terminal is configured to perform the following processing:
receiving downlink scheduling information transmitted by a base station; wherein the downlink scheduling information includes adjustment information; and
transmitting an uplink signal according to the adjustment information;
wherein the uplink signal comprises an acknowledgement, ACK, or a negative acknowledgement, NACK, of downlink data returned by the terminal to the base station after the terminal receives downlink scheduling information and the downlink data transmitted by the base station;
wherein when the transmitting, by the terminal, the uplink signal according to the adjustment information,, the processor is called to execute the instructions and data stored in the storage to perform following processing:
acquiring, from the adjustment information, a time adjustment amount P for the terminal to transmit the ACK/NACK; wherein the time adjustment amount P represents p transmission time intervals, indicates that the terminal transmits the ACK/NACK after p transmission time intervals after receiving the downlink scheduling information, or indicates that the terminal transmits the ACK/NACK after p transmission time intervals based on a transmission time interval for transmitting the ACK/NACK defined in a current LTE system, p is a positive integer;
after the terminal receives the downlink scheduling information, transmitting, according to the time adjustment amount P, the ACK/NACK after p transmission time intervals; or, transmitting, by the terminal according to the time adjustment amount P, the ACK/NACK after p transmission time intervals based on the transmission time interval for transmitting the ACK/NACK defined in the current LTE system.

## Patentansprüche

1. Verfahren zur Timing-Einstellung, das umfasst:
Bestimmen, mittels einer Basisstation, einer Timing Advance, TA, eines Endgeräts; und
Einstellen, mittels der Basisstation entsprechend der TA, eines Zeitpunkts für das Endgerät zur Übertragung eines Uplink-Signals;
wobei das Uplink-Signal eine Rückmeldung, ACK, oder eine negative Rückmeldung, NACK, von Downlink-Daten enthält, die von dem Endgerät an die Basisstation zurückgesendet werden, nachdem das Endgerät von der Basisstation gesendete Downlink-Planungsinformationen und Downlink-Daten empfängt, und wobei das Einstellen, mittels der Basisstation entsprechend der TA, des Zeitpunkts für das Endgerät zur Übertragung des Uplink-Signals umfasst:
Bestimmen, mittels der Basisstation entsprechend der TA, einer Zeiteinstellungsmenge P für das Endgerät zur Übertragung der ACK/NACK, wobei die Zeiteinstellungsmenge P für p Übertragungszeitintervalle steht, angibt, dass das Endgerät die ACK/NACK nach p Übertragungszeitintervallen nach dem Empfang von Downlink-Planungsinformationen überträgt, oder angibt, dass das Endgerät die ACK/NACK nach p Übertragungszeitintervallen basierend auf einem in einem aktuellen LTE-System definierten Übertragungszeitintervall zur Übertragung der ACK/NACK überträgt, wobei p eine positive ganze Zahl ist; und
Übertragen, mittels der Basisstation, von Einstellungsinformationen an das Endgerät über die Downlink-Planungsinformationen, wobei die Einstellungsinformationen die Zeiteinstellungsmenge P enthalten.

2. Verfahren nach Anspruch 1, wobei das Uplink-Signal ferner Uplink-Daten enthält, die von dem Endgerät an die Basisstation als Reaktion auf die Uplink-Planungsinformationen, nachdem das Endgerät die von der Basisstation übertragenen Uplink-Planungsinformationen empfängt, übertragen werden;
wobei das Einstellen, mittels der Basisstation entsprechend der TA, des Zeitpunkts für das Endgerät zur Übertragung der Uplink-Daten umfasst: Einstellen, mittels der Basisstation entsprechend der TA, eines Übertragungszeitintervalls für das Endgerät zur Übertragung der Uplink-Daten nach dem Empfangen der Uplink-Planungsinformationen, so dass das Endgerät genug Zeit hat, Daten vor der Übertragung der Uplink-Daten zu verarbeiten.

3. Verfahren nach Anspruch 2, wobei das Einstellen, mittels der Basisstation, des Zeitpunkts für das Endgerät zur Übertragung der Uplink-Daten umfasst:
Bestimmen, mittels der Basisstation, einer Zeiteinstellungsmenge M für das Endgerät zur Übertragung der Uplink-Daten, wobei die Zeiteinstellungsmenge M für m Übertragungszeitintervalle steht, angibt, dass das Endgerät die Uplink-Daten nach m Übertragungszeitintervallen nach dem Empfangen der Uplink-Planungsinformationen überträgt, oder angibt, dass das Endgerät die Uplink-Daten nach m Übertragungszeitintervallen basierend auf einem in einem aktuellen LTE-System definierten Übertragungszeitintervall zur Übertragung der Uplink-Daten überträgt, wobei m eine positive ganze Zahl ist; und
Übertragen, mittels der Basisstation, von Einstellungsinformationen an das Endgerät über die Uplink-Planungsinformationen, wobei die Einstellungsinformationen die Zeiteinstellungsmenge M enthalten.

4. Verfahren zur Timing-Einstellung, das umfasst:
Empfangen, mittels eines Endgeräts, von Downlink-Planungsinformationen, die von einer Basisstation gesendet werden;
wobei die Downlink-Planungsinformationen Einstellungsinformationen enthalten; und
Übertragen, mittels des Endgeräts, eines Uplink-Signals entsprechend den Einstellungsinformationen;
wobei das Uplink-Signal eine Rückmeldung, ACK, oder eine negative Rückmeldung, NACK, von Downlink-Daten enthält, die von dem Endgerät an die Basisstation zurückgesendet werden, nachdem das Endgerät von der Basisstation gesendete Downlink-Planungsinformationen und Downlink-Daten empfängt;
wobei das Übertragen, mittels des Endgeräts, des Uplink-Signals entsprechend der Einstellungsinformationen umfasst:
Erfassen, mittels des Endgeräts, aus den Einstellungsinformationen, einer Zeiteinstellungsmenge P für das Endgerät zur Übertragung der ACK/NACK; wobei die Zeiteinstellungsmenge P für p Übertragungszeitintervalle steht, angibt, dass das Endgerät die ACK/NACK nach p Übertragungszeitintervallen nach dem Empfang von Downlink-Planungsinformationen überträgt, oder angibt, dass das Endgerät die ACK/NACK nach p Übertragungszeitintervallen basierend auf einem in einem aktuellen LTE-System definierten Übertragungszeitintervall zur Übertragung der ACK/NACK überträgt, wobei p eine positive ganze Zahl ist;
nachdem das Endgerät die Downlink-Planungsinformationen empfängt, Übertragen, mittels des Endgeräts entsprechend der Zeiteinstellungsmenge P, der ACK/NACK nach p Übertragungszeitintervallen; oder Übertragen, mittels des Endgeräts entsprechend der Zeiteinstellungsmenge P, der ACK/NACK nach p Übertragungszeitintervallen basierend auf dem in dem aktuellen LTE-System definierten Übertragungszeitintervall zur Übertragung der ACK/NACK.

5. Verfahren nach Anspruch 4, das ferner umfasst:
nachdem das Endgerät die Downlink-Planungsinformationen empfängt, Übertragen, mittels des Endgeräts, der ACK/NACK der Downlink-Daten entsprechend der Zeiteinstellungsmeng P und der Timing Advance, TA.

6. Verfahren nach Anspruch 4, wobei das Uplink-Signal Uplink-Daten enthält, die von dem Endgerät an die Basisstation als Reaktion auf Uplink-Planungsinformationen übertragen werden, nachdem das Endgerät die von der Basisstation gesendeten Uplink-Planungsinformationen empfängt;
wobei das Übertragen, mittels des Endgeräts, des Uplink-Signals entsprechend der Einstellungsinformationen ferner umfasst:
Erfassen, mittels des Endgeräts, von Einstellungsinformationen in den von der Basisstation gesendeten Uplink-Planungsinformationen, und Bestimmen einer Zeiteinstellungsmenge M für das Endgerät zur Übertragung der Uplink-Daten aus den Einstellungsinformationen in den von der Basisstation gesendeten Uplink-Planungsinformationen; wobei die Zeiteinstellungsmenge M für m Übertragungszeitintervalle steht, angibt, dass das Endgerät die Uplink-Daten nach m Übertragungszeitintervallen nach dem Empfang der Uplink-Planungsinformationen überträgt, oder angibt, dass das Endgerät die Uplink-Daten nach m Übertragungszeitintervallen basierend auf einem in einem aktuellen LTE-System definierten Übertragungszeitintervall zur Übertragung der Uplink-Daten überträgt, wobei m eine positive ganze Zahl ist;
nachdem das Endgerät die Uplink-Planungsinformationen empfängt, Übertragen, mittels des Endgeräts entsprechend der Zeiteinstellungsmenge M, der Uplink-Daten nach m Übertragungszeitintervallen;
oder Übertragen, mittels des Endgeräts entsprechend der Zeiteinstellungsmenge M, der Uplink-Daten nach m Übertragungszeitintervallen basierend auf dem in dem aktuellen LTE-System definierten Übertragungszeitintervall zur Übertragung der Uplink-Daten.

7. Verfahren nach Anspruch 6, das ferner umfasst: nachdem das Endgerät die Uplink-Planungsinformationen empfängt, Übertragen, mittels des Endgeräts, der Uplink-Daten entsprechend der Zeiteinstellungsmenge M und der Timing Advance, TA.

8. Basisstation, die aufweist:
einen Prozessor;
einen Speicher, der über eine Bus-Schnittstelle mit dem Prozessor verbunden ist und dazu ausgebildet ist, Instruktionen und Daten zu speichern, die von dem Prozessor bei der Durchführung von Vorgängen benötigt werden;
einen Transceiver, der dazu ausgebildet ist, mit verschiedenen anderen Vorrichtungen auf einem Übertragungsmedium zu kommunizieren;
wobei, wenn der Prozessor dazu aufgefordert wird, die in dem Speicher gespeicherten Instruktionen und Daten auszuführen, die Basisstation dazu ausgebildet ist, die folgende Verarbeitung durchzuführen:
Bestimmen der Timing Advance, TA, eines Endgeräts; und
Einstellen, entsprechend der TA, eines Zeitpunkts für das Endgeräts zur Übertragung eines Uplink-Signals;
wobei das Uplink-Signal eine Rückmeldung, ACK, oder eine negative Rückmeldung, NACK, von Downlink-Daten enthält, die von dem Endgerät an die Basisstation zurückgesendet werden, nachdem das Endgerät von der Basisstation gesendete Downlink-Planungsinformationen und Downlink-Daten empfängt;
wobei beim Einstellen, entsprechend der TA, des Zeitpunkt für das Endgerät zur Übertragung des Uplink-Signals, der Prozessor dazu aufgefordert wird, die in dem Speicher gespeicherten Instruktionen und Daten auszuführen, um die folgende Verarbeitung durchzuführen:
Bestimmen, entsprechend der TA, einer Zeiteinstellungsmenge P für das Endgerät zur Übertragung der ACK/NACK, wobei die Zeiteinstellungsmenge P für p Übertragungszeitintervalle steht, angibt, dass das Endgerät die ACK/NACK nach p Übertragungszeitintervallen nach dem Empfang der Downlink-Planungsinformationen überträgt, oder angibt, dass das Endgerät die ACK/NACK nach p Übertragungszeitintervallen basierend auf einem in einem aktuellen LTE-System definierten Übertragungszeitintervall zur Übertragung der ACK/NACK überträgt, wobei p eine positive ganze Zahl ist; und
Übertragen von Einstellungsinformationen an das Endgerät über die Downlink-Planungsinformationen, wobei die Einstellungsinformationen die Zeiteinstellungsmenge P enthalten.

9. Endgerät, das aufweist:
einen Prozessor;
einen Speicher, der über eine Bus-Schnittstelle mit dem Prozessor verbunden ist und dazu ausgebildet ist, Instruktionen und Daten zu speichern, die von dem Prozessor bei der Durchführung von Vorgängen benötigt werden;
einen Transceiver, der dazu ausgebildet ist, mit verschiedenen anderen Vorrichtungen auf einem Übertragungsmedium zu kommunizieren;
wobei, wenn der Prozessor dazu aufgefordert wird, die in dem Speicher gespeicherten Instruktionen und Daten auszuführen, das Endgerät dazu ausgebildet ist, die folgende Verarbeitung durchzuführen:
Empfangen von Downlink-Planungsinformationen, die von einer Basisstation gesendet werden; wobei die Downlink-Planungsinformationen Einstellungsinformationen enthalten; und
Übertragen eines Uplink-Signals entsprechend den Einstellungsinformationen;
wobei das Uplink-Signal eine Rückmeldung, ACK, oder eine negative Rückmeldung, NACK, von Downlink-Daten enthält, die von dem Endgerät an die Basisstation zurückgesendet werden, nachdem das Endgerät von der Basisstation gesendete Downlink-Planungsinformationen und Downlink-Daten empfängt;
wobei beim Übertragen, mittels des Endgeräts, des Uplink-Signals entsprechend den Einstellungsinformationen, der Prozessor dazu aufgefordert wird, die in dem Speicher gespeicherten Instruktionen und Daten auszuführen, um die folgende Verarbeitung durchzuführen:
Erfassen, aus den Einstellungsinformationen, einer Zeiteinstellungsmenge P für das Endgerät zur Übertragung der ACK/NACK; wobei die Zeiteinstellungsmenge P für p Übertragungszeitintervalle steht, angibt, dass das Endgerät die ACK/NACK nach p Übertragungszeitintervallen nach dem Empfang von Downlink-Planungsinformationen überträgt, oder angibt, dass das Endgerät die ACK/NACK nach p Übertragungszeitintervallen basierend auf einem in einem aktuellen LTE-System definierten Übertragungszeitintervall zur Übertragung der ACK/NACK überträgt, wobei p eine positive ganze Zahl ist;
nachdem das Endgerät die Downlink-Planungsinformationen empfängt, Übertragen, entsprechend der Zeiteinstellungsmenge P, der ACK/NACK nach p Übertragungszeitintervallen; oder Übertragen, mittels des Endgeräts entsprechend der Zeiteinstellungsmenge P, der ACK/NACK nach p Übertragungszeitintervallen basierend auf dem in dem aktuellen LTE-System definierten Übertragungszeitintervall zur Übertragung der ACK/NACK.

## Revendications

1. Procédé d'ajustement de synchronisation, comprenant :
la détermination, par une station de base, d'une avance de synchronisation, TA, d'un terminal ; et
l'ajustement, par la station de base selon la TA, d'un moment pour que le terminal transmette un signal de liaison montante ;
dans lequel le signal de liaison montante comprend un accusé de réception, ACK, ou un accusé de réception négatif, NACK, de données de liaison descendante renvoyées par le terminal à la station de base après que le terminal a reçu des informations de planification de liaison descendante et des données de liaison descendante envoyées par la station de base, et l'ajustement, par la station de base selon la TA, du moment pour que le terminal transmette le signal de liaison montante, comporte :
la détermination, par la station de base selon la TA, d'une quantité d'ajustement de temps P pour que le terminal transmette l'ACK/NACK, dans lequel la quantité d'ajustement de temps P représente p intervalles de temps de transmission, indique que le terminal transmet l'ACK/NACK après p intervalles de temps de transmission après réception des informations de planification de liaison descendante, ou indique que le terminal transmet l'ACK/NACK après p intervalles de temps de transmission sur la base d'un intervalle de temps de transmission pour transmettre l'ACK/NACK défini dans un système LTE actuel, p est un entier positif ; et
la transmission, par la station de base, d'informations d'ajustement au terminal par l'intermédiaire des informations de planification de liaison descendante, dans lequel les informations d'ajustement comprennent la quantité d'ajustement de temps P.

2. Procédé selon la revendication 1, dans lequel le signal de liaison montante comprend en outre des données de liaison montante transmises par le terminal à la station de base en réponse à des informations de planification de liaison montante après que le terminal a reçu les informations de planification de liaison montante transmises par la station de base ;
dans lequel l'ajustement, par la station de base selon la TA, du moment pour que le terminal transmette les données de liaison montante comprend :
l'ajustement, par la station de base selon la TA, d'un intervalle de temps de transmission pour que le terminal transmette les données de liaison montante après réception des informations de planification de liaison montante, de sorte que le terminal ait suffisamment de temps pour traiter les données avant de transmettre les données de liaison montante.

3. Procédé selon la revendication 2, dans lequel l'ajustement, par la station de base, du moment pour que le terminal transmette les données de liaison montante comprend :
la détermination, par la station de base, d'une quantité d'ajustement de temps M pour que le terminal transmette les données de liaison montante, dans lequel la quantité d'ajustement de temps M représente m intervalles de temps de transmission, indique que le terminal transmet les données de liaison montante après m intervalles de temps de transmission après réception des informations de planification de la liaison montante, ou indique que le terminal transmet les données de liaison montante après m intervalles de temps de transmission sur la base d'un intervalle de temps de transmission pour transmettre les données de liaison montante définies dans un système LTE actuel, m est un entier positif ; et
la transmission, par la station de base, d'informations d'ajustement au terminal par l'intermédiaire des informations de planification de liaison montante, dans lequel les informations d'ajustement comprennent la quantité d'ajustement de temps M.

4. Procédé d'ajustement de synchronisation, comprenant :
la réception, par un terminal, d'informations de planification de liaison descendante transmises par une station de base ;
dans lequel les informations de planification de liaison descendante comportent des informations d'ajustement ; et
la transmission, par le terminal, d'un signal de liaison montante selon les informations d'ajustement ;
dans lequel le signal de liaison montante comprend un accusé de réception, ACK, ou un accusé de réception négatif, NACK, des données de liaison descendante renvoyées par le terminal à la station de base après que le terminal a reçu des informations de planification de liaison descendante et les données de liaison descendante transmises par la station de base ;
la transmission, par le terminal, du signal de liaison montante selon les informations d'ajustement, comporte :
l'acquisition, par le terminal, à partir des informations d'ajustement, d'une quantité d'ajustement de temps P pour que le terminal transmette l'ACK/NACK ;
dans lequel la quantité d'ajustement de temps P représente p intervalles de temps de transmission, indique que le terminal transmet l'ACK/NACK après p intervalles de temps de transmission après réception des informations de planification de liaison descendante, ou indique que le terminal transmet l'ACK/NACK après p intervalles de temps de transmission sur la base d'un intervalle de temps de transmission pour transmettre l'ACK/NACK défini dans un système LTE actuel, p est un entier positif ;
après que le terminal a reçu les informations de planification de liaison descendante, la transmission, par le terminal selon la quantité d'ajustement de temps P, de l'ACK/NACK après p intervalles de temps de transmission ; ou
la transmission, par le terminal selon la quantité d'ajustement de temps P, de l'ACK/NACK après p intervalles de temps de transmission sur la base de l'intervalle de temps de transmission pour transmettre l'ACK/NACK défini dans le système LTE actuel.

5. Procédé selon la revendication 4, comprenant en outre :
après que le terminal a reçu les informations de planification de liaison descendante, la transmission, par le terminal, de l'ACK/NACK des données de liaison descendante selon la quantité d'ajustement de temps P et l'avance de synchronisation, TA.

6. Procédé selon la revendication 4, dans lequel le signal de liaison montante comprend des données de liaison montante transmises par le terminal à la station de base en réponse à des informations de planification de liaison montante après que le terminal a reçu les informations de planification de liaison montante transmises par la station de base ;
dans lequel la transmission, par le terminal, du signal de liaison montante selon les informations d'ajustement, comprend en outre :
l'acquisition, par le terminal, d'informations d'ajustement dans les informations de planification de liaison montante transmises par la station de base, et la détermination d'une quantité d'ajustement de temps M pour que le terminal transmette les données de liaison montante à partir des informations d'ajustement dans les informations de planification de liaison montante transmises par la station de base ;
dans lequel la quantité d'ajustement de temps M représente m intervalles de temps de transmission, indique que le terminal transmet les données de liaison montante après m intervalles de temps de transmission après réception des informations de planification de liaison montante, ou indique que le terminal transmet les données de liaison montante après m intervalles de temps de transmission sur la base d'un intervalle de temps de transmission pour transmettre les données de liaison montante définies dans un système LTE actuel, m est un entier positif ;
après que le terminal a reçu les informations de planification de liaison montante, la transmission, par le terminal selon la quantité d'ajustement de temps M, des données de liaison montante après m intervalles de temps de transmission ; ou
la transmission, par le terminal selon la quantité d'ajustement de temps M, des données de liaison montante après m intervalles de temps de transmission sur la base de l'intervalle de temps de transmission pour transmettre les données de liaison montante définies dans le système LTE actuel.

7. Procédé selon la revendication 6, comprenant en outre :
après que le terminal a reçu les informations de planification de liaison montante, la transmission, par le terminal, des données de liaison montante selon la quantité d'ajustement de temps M et l'avance de synchronisation, TA.

8. Station de base, comprenant :
un processeur ;
une mémoire, connectée au processeur par l'intermédiaire d'une interface de bus, et configurée pour stocker des instructions et des données requises par le processeur pour effectuer des opérations ;
un émetteur-récepteur, conçu pour communiquer avec divers autres dispositifs sur un support de transmission ;
dans laquelle lorsque le processeur est appelé pour exécuter les instructions et les données stockées dans la mémoire, la station de base est configurée pour effectuer le traitement suivant :
la détermination de l'avance de synchronisation, TA, d'un terminal ; et
l'ajustement, selon la TA, d'un moment pour que le terminal transmette un signal de liaison montante ;
dans laquelle le signal de liaison montante comprend un accusé de réception, ACK, ou un accusé de réception négatif, NACK, de données de liaison descendante renvoyées par le terminal à la station de base après que le terminal a reçu des informations de planification de liaison descendante et des données de liaison descendante envoyées par la station de base ;
dans laquelle lors de l'ajustement, selon la TA, du moment pour que le terminal transmette le signal de liaison montante, le processeur est appelé à exécuter les instructions et les données stockées dans la mémoire pour effectuer le traitement suivant :
la détermination, selon la TA, d'une quantité d'ajustement de temps P pour que le terminal transmette l'ACK/NACK, dans laquelle la quantité d'ajustement de temps P représente p intervalles de temps de transmission, indique que le terminal transmet l'ACK/NACK après p intervalles de temps de transmission après réception des informations de planification de liaison descendante, ou indique que le terminal transmet l'ACK/NACK après p intervalles de temps de transmission sur la base d'un intervalle de temps de transmission pour transmettre l'ACK/NACK défini dans un système LTE actuel, p est un entier positif ; et
la transmission d'informations d'ajustement au terminal par l'intermédiaire des informations de planification de liaison descendante, dans lequel les informations d'ajustement comprennent la quantité d'ajustement de temps P.

9. Terminal, comprenant :
un processeur ;
une mémoire, connectée au processeur par l'intermédiaire d'une interface de bus, et configurée pour stocker des instructions et des données requises par le processeur pour effectuer des opérations ;
un émetteur-récepteur, conçu pour communiquer avec divers autres dispositifs sur un support de transmission ;
dans lequel lorsque le processeur est appelé pour exécuter les instructions et les données stockées dans la mémoire, le terminal est configuré pour effectuer le traitement suivant :
la réception d'informations de planification de liaison descendante transmises par une station de base ;
dans lequel les informations de planification de liaison descendante comportent des informations d'ajustement ; et
la transmission d'un signal de liaison montante selon les informations d'ajustement ;
dans lequel le signal de liaison montante comprend un accusé de réception, ACK, ou un accusé de réception négatif, NACK, des données de liaison descendante renvoyées par le terminal à la station de base après que le terminal a reçu des informations de planification de liaison descendante et les données de liaison descendante transmises par la station de base ;
dans lequel lors de la transmission, par le terminal, du signal de liaison montante selon les informations d'ajustement, le processeur est appelé à exécuter les instructions et les données stockées dans la mémoire pour effectuer le traitement suivant :
l'acquisition, à partir des informations d'ajustement, d'une quantité d'ajustement de temps P pour que le terminal transmette l'ACK/NACK ;
dans lequel la quantité d'ajustement de temps P représente p intervalles de temps de transmission, indique que le terminal transmet l'ACK/NACK après p intervalles de temps de transmission après réception des informations de planification de liaison descendante, ou indique que le terminal transmet l'ACK/NACK après p intervalles de temps de transmission sur la base d'un intervalle de temps de transmission pour transmettre l'ACK/NACK défini dans un système LTE actuel, p est un entier positif ;
après que le terminal a reçu les informations de planification de liaison descendante, la transmission, selon la quantité d'ajustement de temps P, de l'ACK/NACK après p intervalles de temps de transmission ; ou
la transmission, par le terminal selon la quantité d'ajustement de temps P, de l'ACK/NACK après p intervalles de temps de transmission sur la base de l'intervalle de temps de transmission pour transmettre l'ACK/NACK défini dans le système LTE actuel.
